# EUROPEAN PATENT SPECIFICATION

(11) **EP 0 526 089 B1**
(45) Date of publication and mention of the grant of the patent: **30.08.1995**
(21) Application number: 92306696.3
(22) Date of filing: 22.07.1992
(51) Int. Cl.: B23H 1/02

(54) **Electric discharge machining apparatus**
Apparat zur Elektroentladungsbearbeitung
Appareil d'usinage par électroérosion

(30) Priority: 29.07.1991 JP 188980/91
(43) Date of publication of application: 03.02.1993
(73) Proprietor: SODICK CO., LTD., Yokohama Kanagawa 222 (JP)
(72) Inventor: Kaneko, Yuji, c/o Japax Inc. Nagatsuda Tech.Center, Midori-ku, Yokohama 227 (JP); Ito, Shinji, c/o Japax Inc. Nagatsuda Tech.Center, Midori-ku, Yokohama 227 (JP); Tajima, Satoru, c/o Sodick Co., Ltd., Sakai-gun, Fukui 919-05 (JP)
(74) Representative: Enskat, Michael Antony Frank

(56) References cited:
- EP-A- 0 196 997
- FR-A- 2 571 285
- PATENT ABSTRACTS OF JAPAN vol. 7, no. 124 (M-218)28 May 1983 & JP-A-58 040 225 (INOUE JAPAX KENKYUSHO KK) 9 march 1983

## Description

The present invention generally relates to an electric discharge machining apparatus. More specifically, the present invention relates to an electric discharge machining apparatus which is equipped with preventive functions for damages to an electrode and a work with undesired arc scars.

Generally in electric discharge machining apparatus, an electrode and a workpiece to be machined (hereafter, referred to as work) are opposed to each other with a gap of microns or 10s microns (um) in machining fluid such as kerosene and water stored in a machining tank. Electricity is fed to generate pulse-like discharge current of high repetition across the gap, thereby machining is made with cumulative electric discharge craters formed on the work by said discharge current. The above-mentioned pulse-like discharge current has a nearly-fixed peak current value and time width and flows intermittently through the gap while repeating ON state (a logical level of "H") and OFF state (a logical level of "L"). To successfully deal with this principle, control in the optimum condition is required for the above-mentioned pulse-like discharge current according to the material and hardness of the work, electric discharge state at the above machining gap. This optimum control prevents the abnormal discharge such as concentrated electric discharge on a particular point and continuous arc discharge from occurring at the machining gap. Consequently, the optimum electric discharge machining is ensured so that a larger crater on a particular point formed by the concentrated electric discharge does not cause a defect on the other surface or the electrode or work is not damaged by arc scars resulting from the the continuous arc discharge.

Above-mentioned optimum control of pulse-like discharge current is performed by making the control means control the electricity supply mechanism for feeding electricity to the machining gap based on detected discharge voltage waveform or discharge current waveform across the machining gap.

As explained above, in an electric discharge machining apparatus, the occurrence of the abnormal discharge is prevented by optimally controlling the pulse-like discharge current generating across the machining gap. However, the optimum control varies depending on condition differences such as flushing conditions of machining fluid, work shapes and electrode jump function in which the electrode moves upward further from the opposed work and then immediately return downward to the position close to the work. Accordingly, in the above optimum control, carbide formation may occur depending on the conditions described above to hinder the progress of the electric discharge machining. Further, the electrode or work may be damaged by arc scars resulting from continuous arc discharge.

For this reason above, in the conventional preventive method, an operator visually observes carbide formation on the surface of the electrode and work during electric discharge machining operation. If the operator recognize the carbide formation in the observation, he stops a series of the electric discharge machining operations.

However, the judgement of the carbide formation depends on the operator's skill. In other words, some operators may stop the electric discharge machining operation after the carbide is formed and normal electric discharges have shifted to the continuous arc discharges. On the other hand, the others may stop it before the carbide is formed. In the former case, the electrode and work may be irrevocably damaged by arc scars resulting from continuous arc discharge. On the other hand, in the latter, the electric discharge machining operation is frequently stopped and work efficiency is excessively decreased.

In the consideration of the above circumstances, an object of the present invention is to provide an electric discharge machining apparatus in which the detection accuracy of the carbide formation is improved and electric discharge machining operation can be stopped immediately before the occurrence of undesired continuous arc discharge when an carbide formation is detected so that work efficiency is improved and the damages to the electrode and work is minimized.

To achieve above object, two detecting means are provided for cutting off an electrical supply when undesired carbide formation on a workpiece or a machining electrode is detected. The first detecting means detects the carbide formation by comparing a discharge voltage with reference voltage. The second detecting means detects the carbide formation by counting discharge pulses with a discharge waiting time shorter than the reference time period. The first detecting means is effective when copper or graphite is used as a machining electrode while the second detecting means is effective when copper tungsten is used as a machining electrode.

Further, first detecting means comprises a precursory phenomenon detecting means for comparing a discharge voltage with a first reference voltage when the discharge waiting time is longer than the reference time value to provide output signal when the discharge voltage is lower than the first reference voltage, and first carbide formation detecting means for comparing a discharge voltage with a second reference voltage greater than said first reference voltage in response to said output signal from the precursory phenomenon detecting means to cut off an electrical supply of said power supply means when the discharge voltage is higher than said second reference voltage.

Thus, according to the present invention there is provided an electric discharge machining apparatus comprising: power supply means for supplying a succession of voltage pulses to produce a discharge across a gap formed between an electrode and a workpiece; gap voltage sensing means for sensing a gap voltage across the gap and generating a gap signal representative of said gap voltage; characterised by discharge detecting means responsive to said gap signal for generating: a) a first signal indicative of when said gap voltage is less than a first reference level during a discharge produced by one of said pulses; b) a second signal indicative of when said gap voltage exceeds a second reference level during a discharge produced by one of said pulses; and c) a third signal indicative of when a discharge waiting time is not more than a reference time period; first carbide formation detecting means, responsive to said first signal and said second signal and arranged to generate a signal to cut off said pulses when said gap voltage is below said first reference level during a discharge for a predetermined number of pulses and then above said second reference level during a discharge for a predetermined number of pulses; second carbide formation detecting means, responsive to said third signal and arranged to generate a signal to cut off said pulses when the discharge waiting time is not more than said reference time period for a predetermined number of pulses.

Fig. 1 is a block diagram showing entire configuration of the electric discharge machining apparatus in an embodiment of the present invention.

Fig. 2 is a block diagram showing internal configuration of the discharge detector 10 shown in Fig. 1.

Fig. 3 is a timing chart showing operation of the discharge detector 10 shown in Fig. 2.

Fig. 4 is a block diagram showing internal configuration of the precursory phenomenon detector 20 shown in Fig. 1.

Fig. 5 is a timing chart showing operation of the precursory phenomenon detector 20 shown in Fig. 4.

Fig. 6 is a block diagram showing internal configuration of the first carbide formation detector 30 shown in Fig. 1.

Fig. 7 is a timing chart showing operation of the first carbide formation detector 30 shown in Fig. 6.

Fig. 8 is a block diagram showing internal configuration of the second carbide formation detector 40 shown in Fig. 1.

Fig. 9 is a timing chart showing operation of the second carbide formation detector 40 shown in Fig. 8.

Fig. 10 is a flow chart showing the operation of precursory phenomenon detector 20.

Fig. 11 is a flow chart showing the operation of first carbide formation detector 30.

Fig. 12 is a flow chart showing the operation of second carbide formation detector 40.

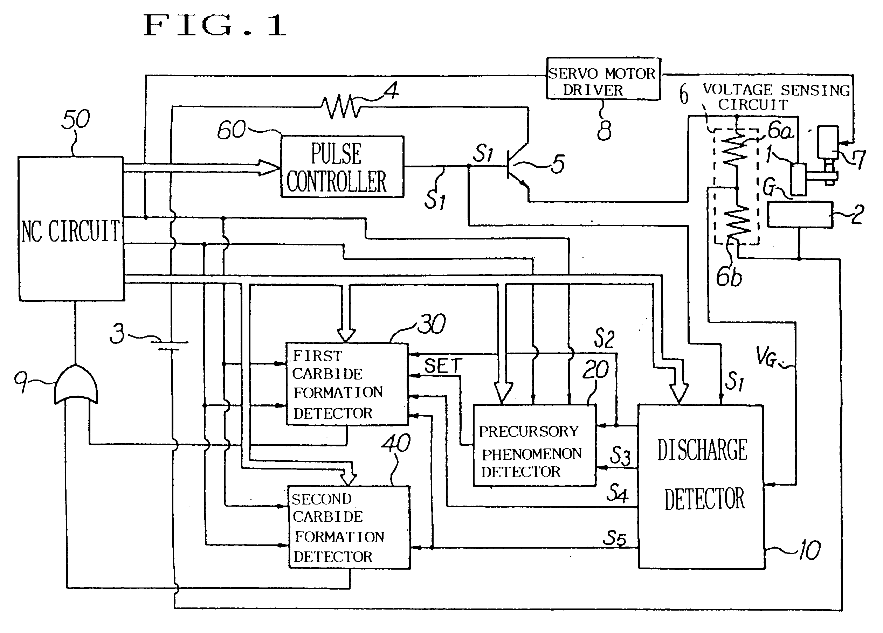

Fig. 1 is a block diagram showing entire configuration of the electric discharge machining apparatus in an embodiment of the present invention. The electric discharge machining apparatus shown in Fig. 1 is roughly divided into machine and electric systems. The machine system includes the machining tank storing machining fluid such as kerosine and water, work holding table which fixedly holds the work 2 which is submerged in the machining fluid, and the machining electrode 1 which opposes to the work 2 with discharge gap G of a given distance. The machining electrode 1 is supported by the arm mechanism incorporated with the servo motor 7 and is movable in the horizontal direction as shown in Fig. 1. In Fig. 1, the machining tank and the work table of the machine system are omitted. The work 2 and work table (not illustrated) are the discharge electrode which equivalently forms the discharge gap G between them and the machining electrode 1. In other words, the machining electrode 1 is connected to the anode of the D.C. power source 3 through the switching element 5 and current limiting resistance 4. While the work 2 and and work table are connected to the cathode of the D.C. power source 3. Details are provided later for the D.C. power source 3, current limiting resistance 4, and the switching element 5.

The electric system includes the D.C. power source 3, the current limiting resistance 4, the switching element 5, voltage sensing circuit 6, servo motor 7, servo motor drive circuit 8, the OR circuit 9, discharge detector 10, precursory phenomenon detector 20, first carbide formation detector 30, second carbide formation detector 40, NC circuit 50, and pulse controller 60. The following describes the above configuration in more detail.

The servo motor drive circuit 8 drives the servo motor 7 to perform the jump motion of the machining electrode 1 based on the jump command signal which NC circuit 50 provides when it is required to discharge the sludges out of the machining gap. The servo motor 7 and the arm mechanism makes the machining electrode 1 move upward further from the opposed work and then immediately return downward to the position close to the work. Further, the servo motor drive circuit 8 drives the servo motor 7 to perform a series of electric discharge machining operations using the machining electrode 1 based on the machining command signal provided from the NC circuit 50. Consequently, the servo motor 7 and the arm mechanism move the machining electrode 1 thereby various types of electric discharge machining are performed on the work 2 as program-preset in the NC circuit 50.

The voltage sensing circuit 6 detects a gap voltage Vg generated at the machining gap G formed between the machining electrode 1 and the work 2. The one end of the circuit 6 is connected to the machining electrode 1 and the other to the work 2 and work table (not illustrated), respectively. The voltage sensing circuit 6 consists of the voltage dividing resistance 6a and 6b and is designed so that outputs to the discharge detector 10 the voltage applied across both ends of the resistance 6b as the gap voltage Vg.

The pulse controller 60 generates a gate signal S1 based on the control signal from the NC circuit 50 and supplies it to the switching element 5 to turn it ON and OFF. The gate signal S1 is also sent to the discharge detector 10. The switching element 5 turns ON and OFF according to the gate signal S1 from the pulse controller 60 to allow the D.C current from the D.C. power source 3 through the current limiting resistance 4 to intermittently flow to the machining electrode 1.

The discharge detector 10 for detecting the discharge state in the machining gap G receives the gap voltage signal Vg from the voltage sensing circuit 6, the gate signal S1 from the pulse controller 60 and control signals from the NC circuit 50 and performs the given signal processing. The detection circuit 10, as a result of the given signal processing, supplies discharging state signal S2 and low level clock signal S3 to the precursory phenomenon detector 20, discharging state signal S2, high level clock signal S4 and infinitesimal discharge waiting time signal S5 to the first carbide formation detector 30, respectively. The details will be described later for the way of the signal processing by the discharge detector 10, and the discharging state signal S2, the low level clock signal S3, the high level clock signal S4 and the infinitesimal discharge waiting time signal S5.

The precursory phenomenon detector 20 detects a precursory phenomenon of carbide formation on the machining electrode 1 and work 2. To detect the precursory phenomenon, the precursory phenomenon detector 20 receives the discharging state signal S2 and the low level clock signal S3 from the discharge detector 10, and control signal, the jump command signal and timer signal from the NC circuit 50 and performs the given signal processing. The timer signal is a signal which NC circuit supplies when normal electric discharge machining state continues in predetermined time period. The detection circuit 20, as a result of the given signal processing, supplies the set signal SET to the first carbide formation detector 30. The details will be described later for the way of the signal processing by the precursory phenomenon detector 20 and the set signal SET.

Both of the first carbide formation detector 30 and the second carbide formation detector 40 are provided to send an arc stop signal to the NC circuit 50 through the OR circuit 9 to stop the electric discharge machining operation when they judge that maintaining the electric discharge machining operation is likely to cause the continuous arc discharge at the machining gap G.

In other words, the first carbide formation detector 30 receives the control signal, the jump command signal and the timer signal from the NC circuit 50, and the discharging state signal S2, the high level clock signal S4 and the infinitesimal discharge waiting time signal S5 from the discharge detector 10 and performs the given signal processing. When the detection circuit 30 stops the electric discharge machining operation, as a result of the given signal processing, it supplies the arc stop signal to the NC circuit 50 through the OR circuit 9. The details will be described later for the way of the signal processing by the first carbide formation detector 30 and the arc stop signal which is sent from the detection circuit 30 to the NC circuit 50.

The second carbide formation detector 40 receives the control signal, the jump command signal and the timer signal from the NC circuit 50, and the infinitesimal discharge waiting time signal S5 from the discharge detector 10 and performs the given signal processing. When the detection circuit 40 stops the electric discharge machining operation, as a result of the given signal processing, it supplies the arc stop signal to the NC circuit 50 through the OR circuit 9. The details will be described later for the way of the signal processing by the second carbide formation detector 40 and the arc stop signal which is sent from the detection circuit 40 to the NC circuit 50.

The NC circuit 50 controls each section included in the machine and electric systems according to the preset programs. The NC circuit 50 supplies the jump command signal and the machining command signal to all of servo motor drive circuit 8, the precursory phenomenon detector 20, the first carbide formation detector 30 and the second carbide formation detector 40. The NC circuit 50 also supplies the timer signal to all of the detection circuits 20, 30 and 40. According to the control signal from the NC circuit 50, the pulse controller 60 generates the gate signal S1. The in-process electric discharge machining operation is stopped whenever the NC circuit 50 receives the arc stop signal through the OR circuit 9 from either of the first carbide formation detector 30 or second carbide formation detector 40.

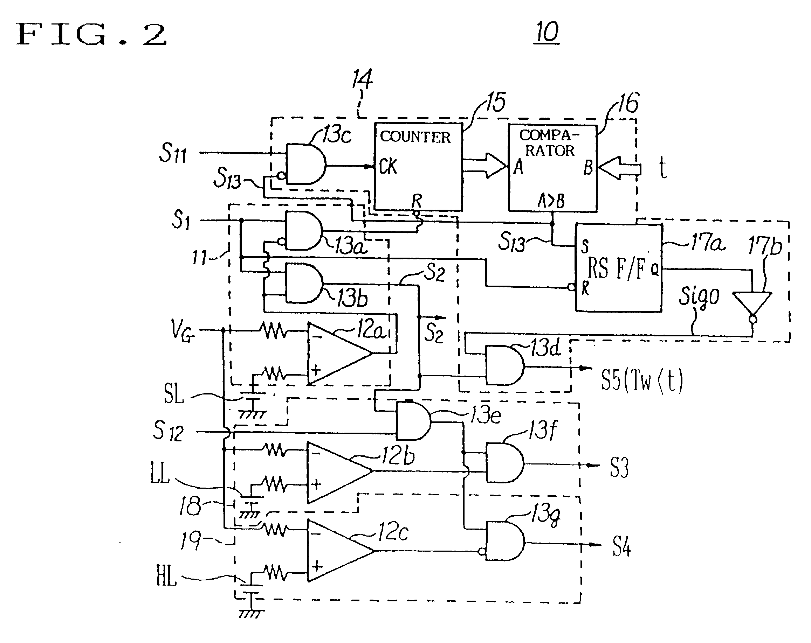

Fig. 2 is a block diagram showing the internal configuration of the discharge detector 10 shown in Fig. 1. As apparently indicated in Fig. 2, the discharge detector 10 consists of first block 14, second block 11, third block 18 and fourth block 19. The first block 14 is provided with the AND circuit 13c, the counter 15, the comparator 16, the RS flip-flop 17a, the inverter 17b and the AND circuit 13d. The second block 11 is provided with the AND circuit 13a and 13b and the comparator 12a. The third block is provided with the AND circuit 13e and 13f the comparator 12b. The fourth block 19 is provided with the AND circuit 13g and the comparator 12c.

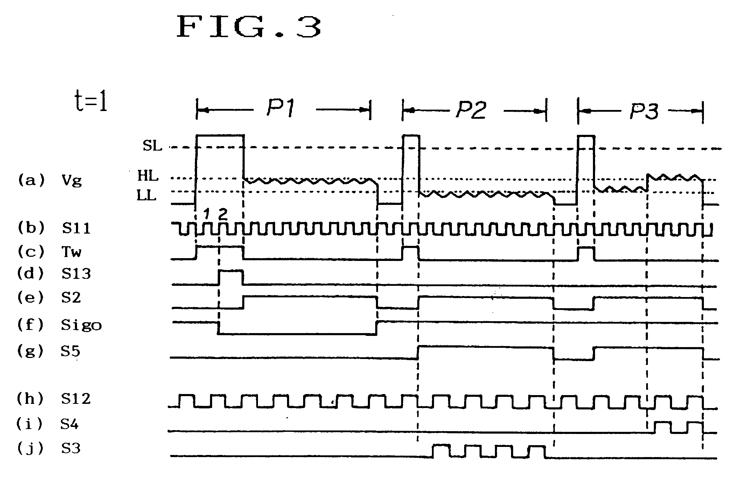

In the above configuration, the comparator 12a compares the gap voltage VG sent from the voltage sensing circuit 6 with the reference voltage i.e., the spark level SL shown in (a) of Fig. 3 and generates the output signal with a logical level of "L" only when the gap voltage Vg marked by (a) in Fig. 3 is higher than the level SL. The AND circuit 13a ANDs the gate signal S1 from the pulse controller 60 and an inverted output signal of the comparator 12a and supplies the output signal Tw with a logical level of "H" to the reset terminal R of the counter 15. The signal Tw representative of discharge waiting time period is shown as (c) in Fig. 3. The AND circuit 13b ANDs the gate signal S1 and an output signal of the comparator 12a and supplies an output signal i.e., the discharging state signal S2 marked by (e) in Fig. 3, to the AND circuits 13d and 13e.

The first clock generator (not illustrated) sends the first clock signal S11 marked by (b) in Fig. 3 having a given frequency to the AND circuit 13c. The AND circuit 13c passes the first clock signal S11 to the clock terminal CK of the counter 15 only when the output signal S13 marked by (d) in Fig. 3 with a logical level of "L" is received from the comparator 16. In other words, the AND circuit 13c is placed in the "through" state only when a logical level of output signal S13 of the comparator 16 is "L". The counter 15 counts up the first clock signal S11 applied to the clock terminal CK and applies the count value to the input terminal A of the comparator 16. The counter 15 is reset when the output signal Tw of the AND circuit 13a with a logical level of "H" is received. In other word, the counter 15 performs counting only for the discharge waiting time period indicated by the signal Tw with a logical level of "H". The state in which the AND circuit 13a applies the signal Tw with a logical level "H" to the counter 15 is that the switching element 5 is in ON state i.e., the logical level of the gate signal S1 is "H" and the gap voltage Vg is higher than the the level SL (i.e., no load voltage state).

The comparator 16 applies an output signal S13 with a logical level of "H" to the inversion input terminal of the AND circuit 13c and the set terminal of the RS flip-flop 17a when the count value applied to the input terminal A is greater than the reference time value t applied to input the terminal B (i.e., A B). In this embodiment, the reference time value is set to correspond to two cycles of the first clock signal S11 according to the control signal from the NC circuit 50.

The RS flip-flop 17a continues to produce an output signal with a logical level of "H" through its output terminal Q when the signal S13 with a logical level of "H" is applied to the set input terminal S. The RS flip-flop 17a is reset when the gate signal S1 with a logical level of "L" is applied to its reset input terminal R. The output signal of the RS flip-flop 17a is supplied through the inverter 17b to the AND circuit 13d. The AND circuit 13d produces the infinitesimal discharge waiting time signal S5 marked by (g) in Fig. 3 only when an output signal Sigo of the inverter 17b marked by (f) in Fig. 3 with a logical level of "H" and the signal S2 with a logical level of "H" are received. The signal S5 is supplied to the first and second carbide formation detectors 30 and 40. In other words, in the condition where the logical level of the signal S5 is "H", the switching element 5 is in ON state, the gap voltage Vg is lower than the level SL and the count value applied to the input terminal A of the comparator 16 is below the reference time value t (t=1). Accordingly, the logical level of the signal S5 is "L" during time period P1 while it is "H" during time period P2 and P3 as shown by (g) in Fig. 3.

The comparator 12b produces an output signal with a logical level of "L" only when the gap voltage Vg is higher than the lower reference discharge voltage level LL (hereinafter, referred to as "level LL") shown in (a) of Fig 3. The AND circuit 13e passes the second clock signal S12 of the frequency which is lower than the first clock signal S11 only when the gap voltage Vg is lower than the level SL and the switching element 5 is in ON state. The second clock signal S12 is marked by (h) in Fig. 3.

The AND circuit 13f passes an output of the AND circuit 13e as the low level clock signal S3 marked by (j) in Fig. 3 only when the output signal of the comparator 12b with a logical level of "H" is received.

The comparator 12c produces an output signal with a logical level of "L" only when the gap voltage Vg is higher than the higher reference discharge voltage level HL (hereinafter, referred to as "level HL") shown in (a) of Fig 3.

The AND circuit 13g passes an output of the AND circuit 13e as the high level clock signal S4 marked by (i) in Fig. 3 only when the inverted output signal of the comparator 12c with a logical level of "H" is received.

The low level clock signal S3 and the high level clock signal S4 are supplied to the precursory phenomenon detector 20 and the first carbide formation detector 30, respectively.

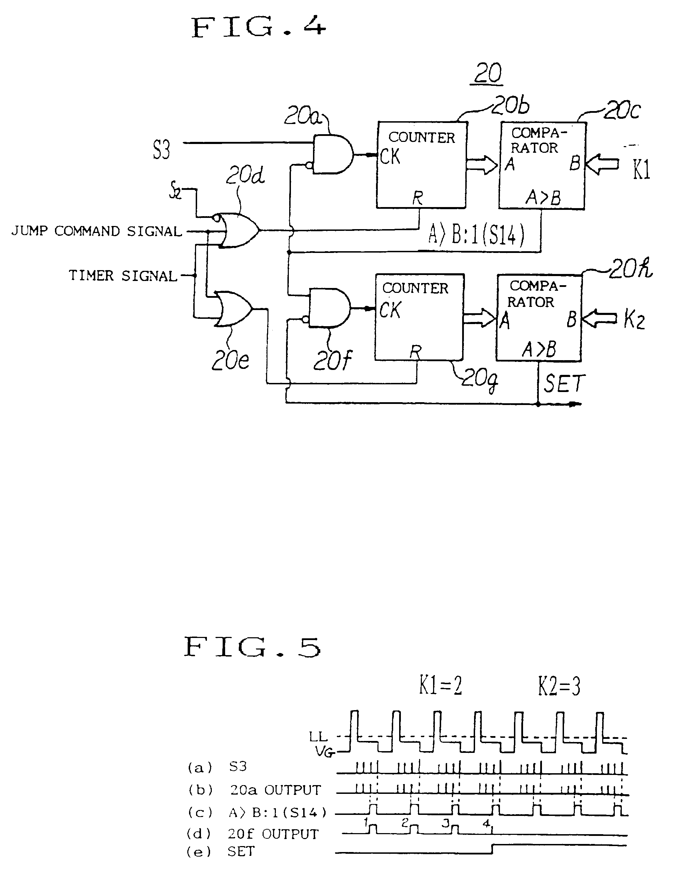

Fig. 4 is a block diagram showing the internal configuration of the precursory phenomenon detector 20. As apparently shown in Fig. 4, the precursory phenomenon detector 20 consists of the AND circuit 20a, counter 20b, comparator 20c, OR circuits 20d and 20e, AND circuit 20f, counter 20g, and comparator 20h.

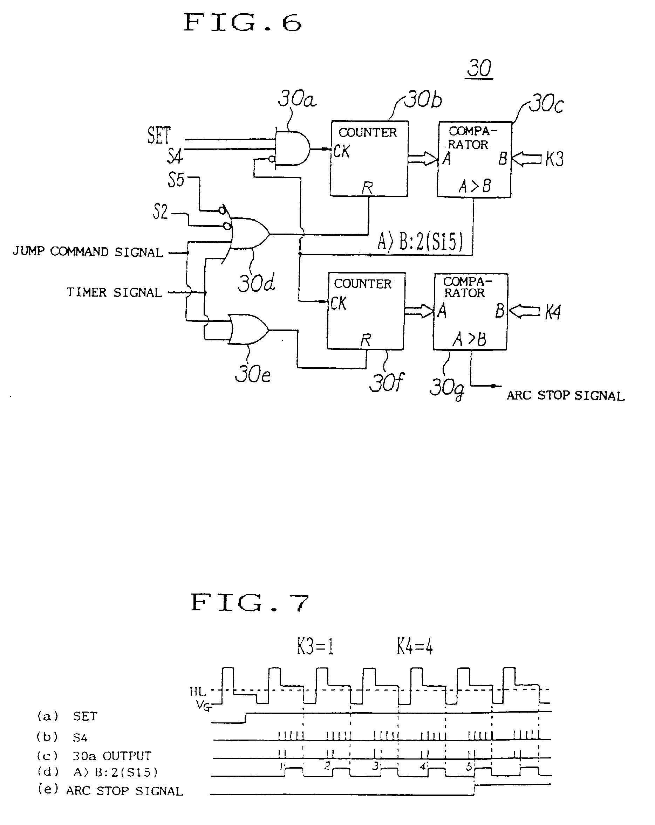

In the above configuration, the AND circuit 20a passes the low level clock signal S3 marked by (a) in Fig. 5 only when the comparator 20c produces an output signal S14 marked by (c) in Fig. 5 with a logical level of "L". An output signal of the AND circuit 20a marked by (b) in Fig. 5 is applied to the clock terminal CK of the counter 20b. The counter 20b counts up the low level clock signal S3 applied to the clock terminal CK and applies the count value to the input terminal A of the comparator 20c. The counter 20b is reset when an output signal of the OR circuit 20d with a logical level of "H" is received. The state in which the OR circuit 20d applies the signal with a logical level "H" to the counter 20b is that when any of the discharging state signal S2, the jump command signal, and the timer signal has a logical level of "H".

The comparator 20c produces the output signal S14 marked by (c) in Fig. 5 with a logical level of "H" only when the count value applied to the input terminal A is greater than the reference value K1 applied to the input terminal B (i.e., A B). In this embodiment, the value K1 sent from the NC circuit 50 is set to "2". The signal S14 is supplied to the inversion input terminal of the AND circuit 20a and the input terminal of the AND circuit 20f.

The AND circuit 20f passes the signal S14 only when the comparator 20h produces the signal SET marked by (e) in Fig. 5 with a logical level of "L". The output signal of the AND circuit 20f marked by (d) in Fig. 5 is applied to the clock terminal CK of the counter 20g.

The counter 20g counts up the signal S14 applied to the clock terminal CK and applies the count value to the input terminal A of the comparator 20h. The counter 20g is reset when an output signal of the OR circuit 20e with a logical level of "H" is received. The state in which the OR circuit 20e applies the signal with a logical level "H" to the counter 20g is that when either of the jump command signal or the timer signal has a logical level of "H".

The comparator 20h produces the output signal SET with a logical level of "H" only when the count value applied to the input terminal A is greater than the reference value K2 applied to the input terminal B (i.e., A B). In this embodiment, the value K2 sent from the NC circuit 50 is set to "3". The signal SET is supplied to the first carbide formation detector 30 and the inversion input terminal of the AND circuit 20f. The detection circuit 30 is placed in a standby state by receiving the signal SET with a logical level of "H".

Fig. 6 is a block diagram showing the internal configuration of the first carbide formation detector 30. As apparently shown in Fig. 6, the first carbide formation detector 30 consists of the AND circuit 30a, counter 30b, comparator 30c, OR circuit 30d and 30e, counter 30f, and comparator 30g.

In the above configuration, the AND circuit 30a passes the high level clock signal S4 marked by (b) in Fig. 7 only when the signal SET is received and the comparator 30c produces an output signal S15 marked by (d) in Fig. 7 with a logical level of "L". An output signal of the AND circuit 30a marked by (c) in Fig. 7 is applied to the clock terminal CK of the counter 30b. The counter 30b counts up the high level clock signal S4 applied to the clock terminal CK and applies the count value to the input terminal A of the comparator 30c. The counter 30b is reset when an output signal of the OR circuit 30d with a logical level of "H" is received. The state in which the OR circuit 30d applies the signal with a logical level "H" to the counter 30b is that when any of the infinitesimal discharge waiting time signal S5, the discharging state signal S2, the jump command signal, and the timer signal has a logical level of "H".

The comparator 30c produces the output signal S15 with a logical level of "H" only when the count value applied to the input terminal A is greater than the reference value K3 applied to the input terminal B (i.e., A B). In this embodiment, the value K3 sent from the NC circuit 50 is set to "1". Thus the value K3 is preferably small value because it may be decided that the carbide has been already formed on a work or a machining electrode when the discharge voltage is higher the level HL. The signal S15 is supplied to the inversion input terminal of the AND circuit 30a and the clock terminal CK of the counter 30f. The counter 30f counts up the signal S15 applied to the clock terminal CK and applies the count value to the input terminal A of the comparator 30g. The counter 30f is reset when an output signal of the OR circuit 30e with a logical level of "H" is received. The state in which the OR circuit 30e applies the signal with a logical level "H" to the counter 30f is that when either the jump command signal or the timer signal has a logical level of "H".

The comparator 30g produces the arc stop signal marked by (e) in Fig. 7 with a logical level of "H" only when the count value applied to the input terminal A is greater than the reference value K4 applied to the input terminal B (i.e., A B). In this embodiment, the value K4 sent from the NC circuit 50 is set to "4". The arc stop signal is supplied to the NC circuit 50 through the OR circuit 9. The NC circuit 50 stops a series of electric discharge machining operations when receiving the arc stop signal.

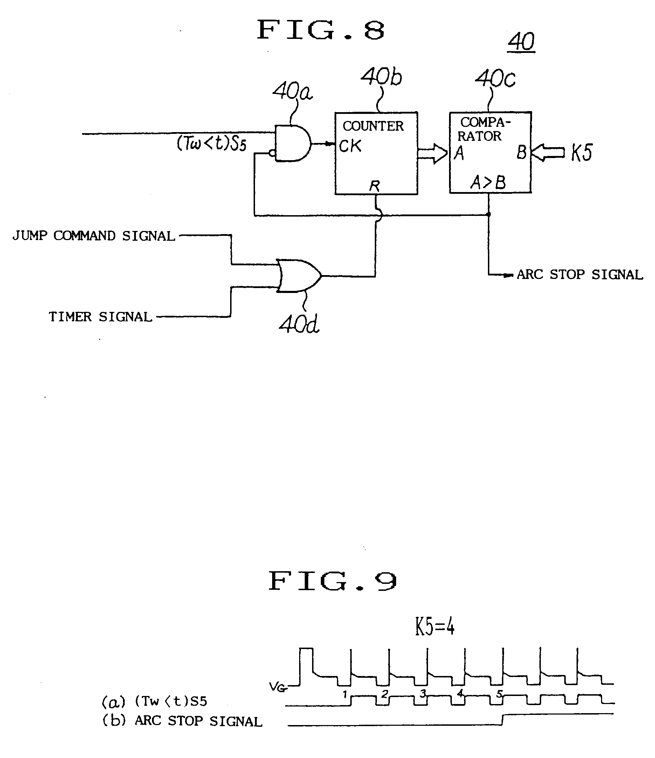

Fig. 8 is a block diagram of showing the internal configuration of the second carbide formation detector 40. As apparently shown in Fig. 8, the second carbide formation detector 40 consists of the AND circuit 40a, counter 40b, comparator 40c, and OR circuit 40d.

In the above configuration, the AND circuit 40a passes the infinitesimal discharge waiting time signal S5 marked by (a) in Fig. 9 only when the comparator 40c produces an arc stop signal marked by (b) in Fig. 9 with a logical level of "L". An output signal of the AND circuit 40a is applied to the clock terminal CK of the counter 40b. The counter 40b counts up the arc stop signal applied to the clock terminal CK and applies the count value to the input terminal A of the comparator 40c. The counter 40b is reset when an output signal of the OR circuit 40d with a logical level of "H" is received. The state in which the OR circuit 40d applies the signal with a logical level "H" to the counter 40d is that when either the jump command signal or the timer signal has a logical level of "H".

The comparator 40c produces the arc stop signal with a logical level of "H" only when the count value applied to the input terminal A is greater than the reference value K5 applied to the input terminal B (i.e., A B). In this embodiment, the value K5 sent from the NC circuit 50 is set to "4". The arc stop signal is supplied to the NC circuit 50 through the OR circuit 9. The NC circuit 50 stops a series of electric discharge machining operations when receiving the arc stop signal.

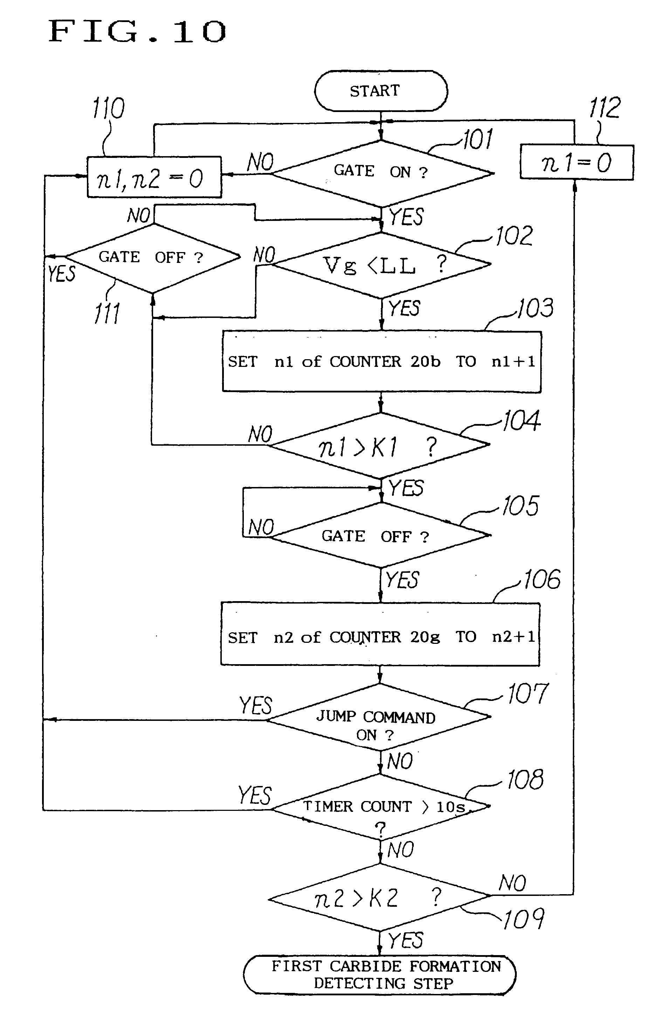

Fig. 10, Fig. 11 and Fig. 12 show operations of the precursory phenomenon detector 20, the first carbide formation detector 30 and the second carbide formation detector 40, respectively.

In Fig. 10, unless the electric discharge machining is in process, both the count value n1 of the counter 20b and the count value n2 of the counter 20g are set to "0" (steps 101 and 110). In step 101, if the electric discharge machining is in process, it goes to step 102. When a gap voltage Vg is below the level LL in step 102, the count value n1 of the counter 20b is set to n1+1 in step 103. And in step 104, when the value n1 equals or is less than the reference value K1, it returns to step 102 under condition that the gate signal is not in OFF state and circulates through a loop of steps 102, 103, 104 and 111.

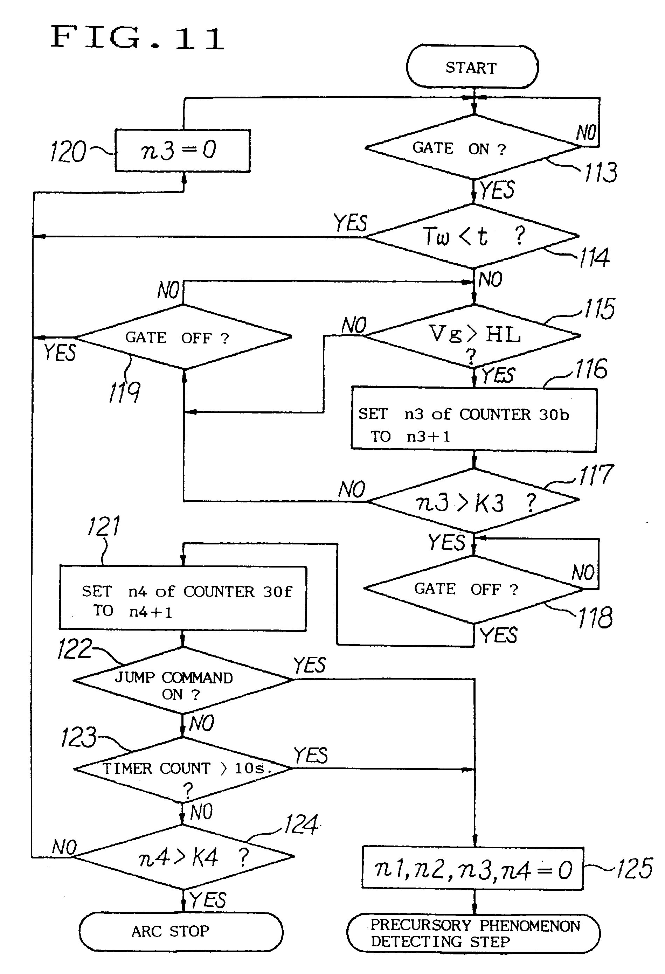

If the value n1 is greater than the value K1, it goes to step 106 under condition that the gate signal is in OFF state (step 105). In step 106, the count value n2 of the counter 20g is set to n2+1. When neither the jump command signal nor the timer signal with a logical level of "H" is received from the NC circuit 50 (step 107 and 108), it goes to step 109. In step 109, when the value n2 is greater than the reference value K2, it goes to the first carbide formation detecting operation shown in Fig. 11. When the value n2 equals or less than the value K2, the count value n1 of the counter 20b is set to 0 (step 112). When either the jump command signal with a logical level of "H" is produced in step 107 or the timer signal with a logical level of "H" is received in step 108, count values n1 and n2 are set to 0 in step 110. Also, when the gate signal is in OFF state in step 111, it goes to step 110.

As shown in Fig. 11, when the gate signal is in ON state in step 113, it goes to step 114. In step 114, when discharge waiting time Tw equals or is longer than the reference time value t, it goes to step 115. When a gap voltage Vg is higher than the level HL in step 115, the count value n3 of the counter 30b is set to n3+1 in step 116. And in step 117, when the value n3 is greater than the reference value K3, it goes to step 118. When the gate signal is in OFF state in step 118, the count value n4 of the counter 30f is set to n4+1 in step 121. And when either the jump command signal with a logical level of "H" is produced in step 122 or the timer signal with a logical level of "H" is received in step 123, count values n1, n2, n3 and n4 are set to 0 and it goes to the precursory phenomenon detecting operation shown in Fig. 10. When neither the jump command signal nor the timer signal from the NC circuit 50 has a logical level of "H" (step 122 and 123), it goes to step 124. In step 124, when the value n4 is greater than the reference value K4, the comparator 30g supplies the arc stop signal with a logical level of "H" to the NC circuit 50. When the value n4 equals or less than the value K4, the value n3 is set to 0 in step 120.

In step 117, when the value n3 equals or is less than the reference value K3, it returns to step 115 under condition that the gate signal is not in OFF state and circulates through a loop of steps 115, 116, 117 and 119. In step 114, when discharge waiting time Tw is shorter than the reference time value t, the value n3 is set to 0 in step 120.

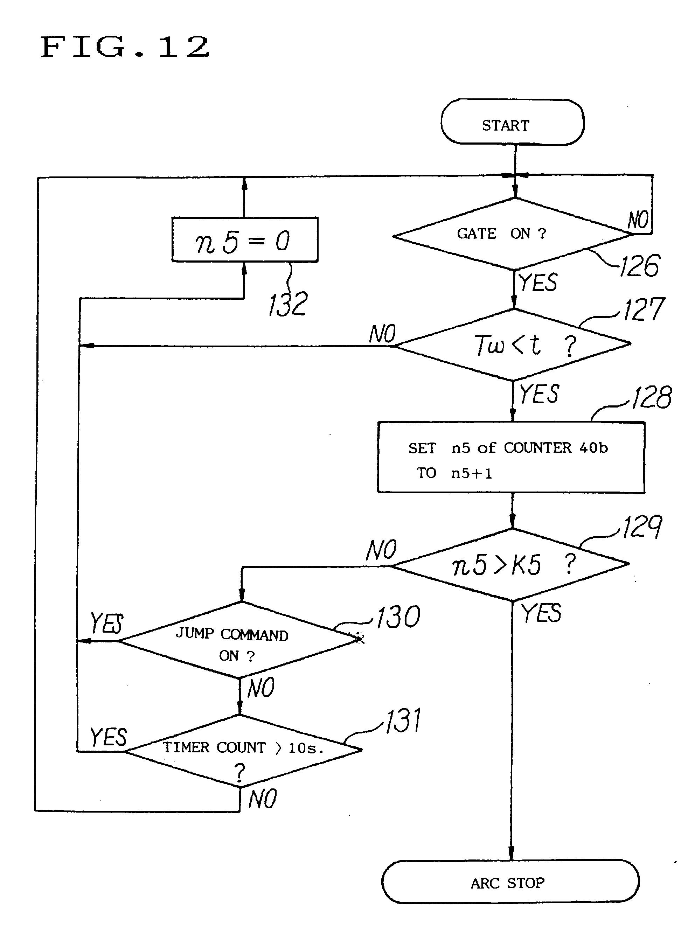

As shown in Fig. 12, when the gate signal is in ON state in step 126, it goes to step 127. When discharge waiting time Tw is shorter than the reference time value t in step 127, the count value n5 of the counter 40b is set to n5+1 in step 128. In step 129, when the value n5 is greater than the reference value K4, the comparator 40c supplies the arc stop signal with a logical level of "H" to the NC circuit 50, otherwise it goes to step 130. When either the jump command signal with a logical level of "H" is produced in step 130 or the timer signal with a logical level of "H" is received in step 131, the value n5 is set to 0 in step 132. In step 132, when the timer signal is not received, it goes to step 126. In step 126, when the discharge waiting time Tw is equals or is longer than the reference time value t, it goes to step 132.

## Claims

1. An electric discharge machining apparatus comprising:
power supply means (3) for supplying a succession of voltage pulses to produce a discharge across a gap formed between an electrode (1) and a workpiece (2);
gap voltage sensing means (6) for sensing a gap voltage across the gap and generating a gap signal representative of said gap voltage;
characterised by discharge detecting means (10) responsive to said gap signal for generating:
a) a first signal (S3) indicative of when said gap voltage is less than a first reference level (LL) during a discharge produced by one of said pulses;
b) a second signal (S4) indicative of when said gap voltage exceeds a second reference level (HL) during a discharge produced by one of said pulses; and
c) a third signal (S5) indicative of when a discharge waiting time is not more than a reference time period;
first carbide formation detecting means (20,30), responsive to said first signal and said second signal and arranged to generate a signal to cut off said pulses when said gap voltage is below said first reference level during a discharge for a predetermined number of pulses and then above said second reference level during a discharge for a predetermined number of pulses;
second carbide formation detecting means (40), responsive to said third signal and arranged to generate a signal to cut off said pulses when the discharge waiting time is not more than said reference time period for a predetermined number of pulses.

2. An apparatus as claimed in Claim 1,
wherein said first carbide formation detecting means includes:
a precursor phenomenon detector (20) for generating a fourth signal (SET) when said gap voltage is below said first reference level during a discharge for a predetermined number of pulses and a first carbide formation detector (30) and arranged to generate a signal to cut off said pulses when said fourth signal is received and when said gap voltage is above said second reference level during a discharge for a predetermined number of pulses.

3. An apparatus according to Claim 2, wherein said gap voltage sensing means comprises a voltage divider circuit (6a,6b) connected across the gap and wherein said gap signal comprises a voltage proportional to the voltage across the gap.

4. An apparatus according to any one of Claims 2 and 3, wherein said precursor phenomenon detector includes counting means (20g) for counting pulses for each of which said gap voltage is less than said first reference level during a discharge and comparing means (20h) for comparing a count of pulses with a first predetermined number (K3) to produce said fourth signal (SET).

5. An apparatus according to any one of Claims 2 to 4, wherein said first carbide formation detector includes counting means (30f) for counting pulses for each of which said gap voltage exceeds said second reference level during a discharge and comparing means (30g) for comparing a count of pulses with a second predetermined number (K4).

6. An apparatus according to any one of Claims 2 to 5, wherein said second carbide formation detecting means includes counting means (40b) for counting said third signal and comparing means (40c) for comparing a count of said third signals with a third predetermined number (K5).

7. An apparatus according to any one of Claims 2 to 6, wherein said discharge detecting means includes comparing means (12b) for comparing said gap voltage with said first reference level and gating means (13f) responsive to said comparing means (12b) and a clock signal for passing said clock signal when said gap voltage is less than said first reference level during a discharge to generate said first signal.

8. An apparatus according to any one of Claims 2 to 7, wherein said discharge detecting means includes comparing means (12c) for comparing said gap voltage with said second reference level and gating means (13g) responsive to said comparing means (12c) and a clock signal for passing said clock signal when said gap voltage exceeds said second reference level during a discharge to generate said second signal.

9. A method of controlling an electric discharge machine to prevent concentrated and continuous arc discharges, said machine having a power supply (3) for supplying a succession of voltage pulses to a machining gap formed between a tool electrode (1) and a workpiece electrode (2) to generate discharges therebetween, said method comprising the steps of:
monitoring the voltage across the machining gap;
characterised by generating a first signal (S3) when the gap voltage is less than a first reference level during a discharge for a first predetermined number of pulses;
generating a second signal (S4) when the gap voltage is greater than a second reference level during a discharge;
generating a third signal (S5) when a discharge waiting time is not more than a reference time period;
cutting off the supply of voltage pulses to the machining gap when the first signal is present and then the second signal is present for a second predetermined number of pulses; and
cutting off the supply of voltage pulses to the machining gap when the third signal is present for more than a third predetermined number of pulses.

## Patentansprüche

1. Einrichtung zur Funkenersosionsbearbeitung mit einem Stromversorgungsmittel (3) zum Erzeugen einer Folge von Spannungspulsen, um über einem zwischen einer Elektrode (1) und einem Werkstück (2) gebildeten Spalt eine Entladung zu erzeugen, und mit einem Spaltspannungssensormittel (6) zum Erfassen einer Spaltspannung über dem Spalt und zum Erzeugen eines der Spaltspannung entsprechenden Spaltsignals, **gekennzeichnet durch** Entladungsnachweismittel (10), die auf das Spaltsignal ansprechen, um folgendes zu erzeugen:
a) ein erstes Signal (S3), das anzeigt, wenn die Spaltspannung geringer als ein erster Referenzwert (LL) während einer durch einen dieser Pulse erzeugten Entladung ist;
b) ein zweites Signal (S4), das anzeigt, wenn die Spaltspannung einen zweiten Referenzwert (HL) während einer durch einen dieser Pulse erzeugten Entladung übersteigt; und
c) ein drittes Signal (S5), das anzeigt, wenn eine Entladungswartezeit nicht größer als eine Referenzzeitdauer ist;
erste Karbidbildungsnachweismittel (20, 30), die auf das erste Signal und das zweite Signal ansprechen und angeordnet sind, um ein Signal zum Abschalten der Pulse dann, wenn die Spaltspannung unter dem ersten Referenzwert während einer Entladung bei einer vorbestimmten Anzahl von Pulsen liegt, und dann, wenn sie über dem zweiten Referenzwert während einer Entladung bei einer vorbestimmten Anzahl von Pulsen liegt, zu erzeugen; zweite Karbidbildungsnachweismittel (40), die auf das dritte Signal ansprechen und angeordnet sind, um ein Signal zum Abschalten der Pulse dann, wenn die Entladungswartezeit nicht größer als die Referenzzeitdauer für eine vorbestimmte Anzahl von Pulsen ist, zu erzeugen.

2. Einrichtung nach Anspruch 1, dadurch gekennzeichnet, daß das erste Karbidbildungsnachweismittel folgendes aufweist: einen Vorstufenphänomendetektor (20) zum Erzeugen eines vierten Signals (SET) dann, wenn die Spaltspannung unter dem ersten Referenzwert während einer Entladung bei einer vorbestimmten Anzahl von Pulsen liegt, und einen ersten Karbidbildungsdetektor (30), der angeordnet ist, um ein Signal zum Abschalten der Pulse dann, wenn das vierte Signal empfangen wird und wenn die Spaltspannung oberhalb des zweiten Referenzwerts während einer Entladung bei einer vorbestimmte Anzahl von Pulsen liegt, zu erzeugen.

3. Einrichtung nach Anspruch 2, dadurch gekennzeichnet, daß das Spaltspannungssensormittel eine über den Spalt geschaltete Spannungsteilerschaltung (6a, 6b) aufweist und daß das Spaltsignal eine Spannung proportional zur Spannung über dem Spalt besitzt.

4. Einrichtung nach Anspruch 2 oder 3, dadurch gekennzeichnet, daß der Vorstufenphänomendetektor Zählmittel (20g) zum Zählen jedes Pulses, für den die Spaltspannung kleiner als der erste Referenzwert während einer Entladung ist, und Vergleichermittel (20h) zum Vergleichen einer Anzahl von Pulsen mit einer ersten vorbestimmten Zahl (K3), um das vierte Signal (SET) zu erzeugen, aufweist.

5. Einrichtung nach einem der Ansprüche 2 bis 4, dadurch gekennzeichnet, daß der erste Karbidbildungsdetektor Zählmittel (30f) zum Zählen jedes Pulses, für den die Spaltspannung den zweiten Referenzwert während einer Entladung übersteigt, und Vergleichermittel (30g) zum Vergleichen einer Anzahl von Pulsen mit einer zweiten vorbestimmten Anzahl (K4) aufweist.

6. Einrichtung nach einem der Ansprüche 2 bis 5, dadurch gekennzeichnet, daß das zweite Karbidbildungsnachweismittel Zählmittel (40b) zum Zählen des dritten Signals und Vergleichermittel (40c) zum Vergleichen einer Anzahl der dritten Signale mit einer dritten vorbestimmten Zahl (K5) aufweist.

7. Einrichtung nach einem der Ansprüche 2 bis 6, dadurch gekennzeichnet, daß die Entladungsnachweismittel ein Vergleichermittel (12b) zum Vergleichen der Spaltspannung mit dem ersten Referenzwert und ein Verknüpfungsmittel (13f) aufweist, das auf das Vergleichermittel (12b) und ein Taktsignal zum Durchlassen des Taktsignals dann, wenn die Spaltspannung kleiner als der erste Referenzwert während einer Entladung ist, anspricht, um das erste Signal zu erzeugen.

8. Einrichtung nach einem der Ansprüche 2 bis 7, dadurch gekennzeichnet, daß das Entladungsnachweismittel ein Vergleichermittel (12c) zum Vergleichen der Spaltspannung mit dem zweiten Referenzwert und ein Verknüpfungsmittel (13g) aufweist, das auf das Vergleichermittel (12c) und ein Taktsignal zum Durchlassen des Taktsignals dann, wenn die Spaltspannung den zweiten Referenzwert während einer Entladung übersteigt, anspricht, um das zweite Signal zu erzeugen.

9. Verfahren zum Steuern einer Funkenerosionsmaschine, um konzentrierte und kontinuierliche Lichtbogenentladungen zu verhindern, wobei die Maschine eine Stromversorgung (3) zum Erzeugen einer Folge von Spannungspulsen an einem zwischen einer Werkzeugelektrode (1) und einer Werkstückelektrode (2) gebildeten Bearbeitungsspalt, um über diesen Entladungen zu erzeugen, aufweist, wobei das Verfahren folgende Schritte enthält:
Überwachung der Spannung über dem Bearbeitungsspalt; gekennzeichnet durch das Erzeugen eines ersten Signals (S3) dann, wenn die Spaltspannung kleiner als ein erster Referenzwert während einer Entladung bei einer ersten vorbestimmten Anzahl von Pulsen ist;
das Erzeugen eines zweiten Signals (S4) dann, wenn die Spaltspannung größer als ein zweiter Referenzwert während einer Entladung ist;
das Erzeugen eines dritten Signals (S5) dann, wenn eine Entladungswartezeit nicht größer als eine Referenzzeitdauer ist;
das Abschalten der Lieferung von Spannungspulsen für den Bearheitungsspalt dann, wenn das erste Signal anliegt, und dann, wenn das zweite Signal bei einer zweiten vorbestimmten Anzahl von Pulsen anliegt; und das Abschalten der Lieferung von Spannungspulsen des Bearbeitungsspalts dann, wenn das dritte Signal über mehr als eine dritte vorbestimmte Anzahl von Pulsen anliegt.

## Revendications

1. Appareil d'usinage par électro-érosion comprenant :
un moyen d'alimentation électrique (3) destiné à appliquer une suite d'impulsions de tension afin de produire une décharge aux bornes d'un écartement formé entre une électrode (1) et une pièce à usiner (2),
un moyen de capteur de tension dans l'écartement (6) destiné à capter une tension dans l'écartement aux bornes de l'écartement et à générer un signal d'écartement représentatif de ladite tension dans l'écartement,
caractérisé par un moyen de détection de décharge (10) répondant audit signal d'écartement afin de générer :
(a) un premier signal (S3) indicatif du moment où ladite tension dans l'écartement est inférieure à un premier niveau de référence (LL) lors d'une décharge produite par l'une desdites impulsions,
(b) un second signal (S4) indicatif du moment où ladite tension dans l'écartement dépasse un second niveau de référence (HL) lors d'une décharge produite par l'une desdites impulsions, et
(c) un troisième signal (S5) indicatif du moment où une durée d'attente de décharge n'est pas supérieure à un intervalle de temps de référence,
un premier moyen de détection de formation de carbure (20,30), répondant audit premier signal et audit second signal et agencé de façon à générer un signal pour désactiver lesdites impulsions lorsque ladite tension dans l'écartement est en-dessous dudit premier niveau de référence lors d'une décharge pendant un nombre prédéterminé d'impulsions, et ensuite au-dessus dudit second niveau de référence lors d'une décharge pendant un nombre prédéterminé d'impulsions,
un second moyen de détection de formation de carbure (40), répondant audit troisième signal et agencé de façon à générer un signal pour désactiver lesdites impulsions lorsque la durée d'attente de décharge n'est pas supérieure auxdits intervalles de temps de référence pendant un nombre prédéterminé d'impulsions.

2. Appareil selon la revendication 1, dans lequel ledit premier moyen de détection de formation de carbure comprend :
un détecteur de phénomène précurseur (20) destiné à générer un quatrième signal (SET) lorsque ladite tension dans l'écartement est en-dessous dudit premier niveau de référence lors d'une décharge pendant un nombre prédéterminé d'impulsions, ainsi qu'un premier détecteur de formation de carbure (30) agencé de façon à générer un signal pour désactiver lesdites impulsions lorsque ledit quatrième signal est reçu et lorsque ladite tension dans l'écartement est au-dessus dudit second niveau de référence lors d'une décharge pendant un nombre prédéterminé d'impulsions.

3. Appareil selon la revendication 2, dans lequel ledit moyen de capteur de tension dans l'écartement comprend un circuit diviseur de tension (6a,6b) relié aux bornes de l'écartement, et dans lequel ledit signal d'écartement présente une tension proportionnelle à la tension aux bornes de l'écartement.

4. Appareil selon l'une quelconque des revendications 2 et 3, dans lequel ledit détecteur de phénomène précurseur comprend un moyen de comptage (20g) destiné à compter les impulsions pour chacune desquelles ladite tension dans l'écartement est inférieure audit premier niveau de référence lors d'une décharge, et un moyen de comparaison (20h) destiné à comparer un compte d'impulsions à un premier nombre prédéterminé (K3) afin de produire ledit quatrième signal (SET).

5. Appareil selon l'une quelconque des revendications 2 à 4, dans lequel ledit premier détecteur de formation de carbure comprend un moyen de comptage (30f) destiné à compter les impulsions pour chacune desquelles ladite tension dans l'écartement dépasse ledit second niveau de référence lors d'une décharge, et un moyen de comparaison (30g) destiné à comparer un compte d'impulsions à un second nombre prédéterminé (K4).

6. Appareil selon l'une quelconque des revendications 2 à 5, dans lequel ledit second moyen de détection de formation de carbure comprend un moyen de comptage (40b) destiné à compter ledit troisième signal, et un moyen de comparaison (40c) destiné à comparer un compte desdits troisièmes signaux à un troisième nombre prédéterminé (K5).

7. Appareil selon l'une quelconque des revendications 2 à 6, dans lequel ledit moyen de détection de décharge comprend un moyen de comparaison (12b) destiné à comparer ladite tension dans l'écartement audit premier niveau de référence, et un moyen de sélection par porte (13f) répondant audit moyen de comparaison (12b), et un signal d'horloge afin de laisser passer ledit signal d'horloge lorsque ladite tension dans l'écartement est inférieure audit premier niveau de référence lors d'une décharge afin de générer ledit premier signal.

8. Appareil selon l'une quelconque des revendications 2 à 7, dans lequel ledit moyen de détection de décharge comprend un moyen de comparaison (12c) destiné à comparer ladite tension dans l'écartement audit second niveau de référence, et un moyen de sélection par porte (13g) répondant audit moyen de comparaison (12c), et un signal d'horloge afin de laisser passer ledit signal d'horloge lorsque ladite tension dans l'écartement dépasse ledit second niveau de référence lors d'une décharge afin de générer ledit second signal.

9. Procédé de commande d'une machine à électro-érosion destiné à empêcher des décharges à arcs concentrés et continus, ladite machine comportant une alimentation électrique (3) destinée à appliquer une suite d'impulsions de tension à un écartement d'usinage formé entre une électrode d'outil (1) et une électrode de pièce à usiner (2) afin de générer des décharges entre celles-ci, ledit procédé comprenant les étapes consistant en :
la surveillance de la tension aux bornes de l'écartement d'usinage par électro-érosion,
caractérisé par
la génération d'un premier signal (S3) lorsque la tension dans l'écartement est inférieure à un premier niveau de référence lors d'une décharge pendant un premier nombre prédéterminé d'impulsions,
la génération d'un second signal (S4) lorsque la tension dans l'écartement est supérieure à un second niveau de référence lors d'une décharge,
la génération d'un troisième signal (S5) lorsque une durée d'attente de décharge n'est pas supérieure à un intervalle de temps de référence,
la désactivation de l'application des impulsions de tension à l'écartement d'usinage lorsque le premier signal est présent et qu'alors le second signal est présent pendant un second nombre prédéterminé d'impulsions, et
la désactivation de l'application des impulsions de tension à l'écartement d'usinage lorsque le troisième signal est présent pendant un nombre d'impulsions supérieur à un troisième nombre prédéterminé d'impulsions.
